# EUROPÄISCHE PATENTANMELDUNG

(11) **EP 0 646 730 A2**
(43) Veröffentlichungstag der Anmeldung: **05.04.1995**
(21) Anmeldenummer: 94115173.0
(22) Anmeldetag: 27.09.1994
(51) Int. Cl.: F16B 13/04

(54) **Vorrichtung und deren Anwendung zur Befestigung eines Gegenstands an einer Wand**

(30) Priorität: 28.09.1993 DE 9314641 U
(71) Anmelder: HEWI Heinrich Wilke GmbH, D-34454 Arolsen (DE)
(72) Erfinder: Dziuk, Richard, D-34454 Arolsen (DE)
(74) Vertreter: Freiherr von Schorlemer, Reinfried

(57) **Zusammenfassung**

Die Erfindung betrifft eine Vorrichtung zur Befestigung eines Gegenstands an einer eine Bohrung (18) aufweisenden Wand (17) od. dgl.. Die Vorrichtung besteht aus einer zum Durchstecken durch die Bohrung (18) und zur Anordnung auf der Rückseite der Wand (17) bestimmten Mutter (1), die eine Gewindebohrung, eine deren Durchmesser nur wenig überragende Breite und eine den Bohrungsdurchmesser um ein Mehrfaches überragende Länge besitzt, einem mit der Mutter (1) verbundenen, der Montage dienenden Halteelement (8), einem Bolzen mit einem in die Gewindebohrung der Mutter (1) eindrehbaren Gewindeabschnitt und einem zur Anordnung auf der Vorderseite der Wand (17) bestimmten Mittel zur Verspannung der Wand (17) zwischen diesem und der Mutter (1). Die Mutter (1) besitzt im Bereich der Gewindebohrung ihre größte Höhe und von dort zu ihren Längsrändern hin eine allmählich abnehmende Höhe. Das Mittel zur Verspannung ist am Bolzen abgestützt .

## Beschreibung

Die Erfindung betrifft eine Vorrichtung der im Oberbegriff des Anspruchs 1 angegebenen Gattung und eine Anwendung dieser Vorrichtung.

Vorrichtungen, die häufig aus normalen Bolzen und von beiden Seiten einer Wand auf diese aufgeschraubten Muttern bestehen, sind in vielfacher Form bekannt, können aber nicht angewendet werden, wenn die rückwärtige Wandseite nicht zugänglich ist oder nicht zugänglich sein soll, wie dies beispielsweise für die Montage von Gegenständen wie Haltestangen, Stoßgriffen, Haken od. dgl. an aus Stahl oder Aluminium bestehenden Hohlprofilen von Glas- oder Leichtmetalltüren od. dgl. zutrifft, bei denen dünne Wandteile mit einer Stärke von z.B. nur 1,5 bis 2,5 mm durch dazwischen befindliche Hohlräume getrennt sind.

Zur Montage von Gegenständen an derartigen Hohlprofilen könnte im Prinzip eine Vorrichtung der eingangs bezeichneten Gattung verwendet werden, die eine spezielle Art von Kippdübel darstellt und zur Befestigung von Gegenständen an Hohldecken oder Hohlwänden, insbesondere solchen dient, die z.B. unter Verwendung von Gipskartonplatten od. dgl. hergestellt sind. Bei dieser bekannten Vorrichtung, die vollständig aus Kunststoffteilen zusammengesetzt ist, besteht das Halteelement aus einem an die Mutter angeformten, eine sägezahnartige Profilierung aufweisenden Streifen, während das Mittel zur Verspannung aus einer an diesem Streifen verschiebbar geführten Gegenscheibe besteht. Zur Montage der Vorrichtung wird zunächst die Mutter bei noch nicht eingedrehtem Bolzen durch eine Wandbohrung in einen hinter der Wand befindlichen Hohlraum eingeführt, wobei sie gleichzeitig mit dem Halteelement festgehalten wird und daher nicht im Hohlraum herabfallen und verloren gehen kann. Zur Vorbereitung des Eindrehens des Bolzens wird die Mutter dann mittels des Haltemittels in die erforderliche Position gezogen, worauf das Mittel zur Verspannung mit einem an ihm angebrachten Ansatz in die Wandbohrung eingeführt wird, bis die Gegenscheibe fest an der Wand anliegt und gleichzeitig hinter einem der am Haltemittel angebrachten Zähne einrastet. Abschließend werden das Haltemittel dicht unter der Gegenscheibe abgeschnitten und der Bolzen bis zu einer vorgewählten Tiefe in die Gewindebohrung der Mutter eingedreht.

Vorrichtungen dieser Art eignen sich, da der Bolzen im Gegensatz zu anderen bekannten Kippdübeln erst dann in die Mutter eingedreht werden braucht, wenn diese sich bereits in dem hinter der Wand befindlichen Hohlraum befindet, grundsätzlich zur Lösung einer Vielzahl von Montageaufgaben, bei denen wegen nicht ausreichender Platzverhältnisse innerhalb der Hohlräume andere bekannte Kippdübel nicht angewendet werden können. Dennoch sind auch diese Vorrichtungen nicht für alle denkbaren Anwendungsfälle geeignet. Dies gilt insbesondere dann, wenn vergleichsweise schwere Stoßgriffe od. dgl. an den Hohlprofilen von Glas- oder Rahmentüren befestigt werden sollen, da bei diesen nicht nur sehr kleine Wandstärken vorkommen, sondern auch in der Regel Hohlräume vorgesehen sind, deren Tiefe vergleichsweise gering ist und beispielsweise weniger als ca. 20 mm beträgt. Angesichts dieser räumlichen Beschränkungen sind Vorrichtungen der eingangs beschriebenen Art nur anwendbar, wenn ihre in der Regel quaderförmigen Muttern vergleichsweise kurz und flach ausgebildet werden, damit sie vor Erreichen des Hohlraumendes in dem erforderlichen Umfang verschwenkt werden können. Dies hat dann allerdings zur Folge, daß diejenigen Flächen der Muttern, die an der Rückseite der Wand zu liegen kommen, nicht ausreichend groß sind und die Höhe der Muttern nur zur Unterbringung einer geringen Anzahl von Gewindegängen im Bereich der Gewindebohrung ausreicht. Dadurch ergeben sich Beschränkungen im Hinblick auf die Stabilität solcher Verbindungen, so daß diese für die genannten Anwendungszwecke nicht brauchbar ist. Daneben ist das zur Herstellung der Verspannung vorgesehene Mittel allenfalls für Anwendungsfälle geeignet, bei denen der montierte Gegenstand nach seiner Befestigung an der Wand keinen größeren Belastungen mehr ausgesetzt wird, wie dies beispielsweise für die Stoßgriffe von Pendeltüren od. dgl. gilt.

Es ist daher auch bereits eine Vorrichtung bekannt geworden (DE 37 25 719 A1), bei der die Mutter aus einem am einen Ende des Bolzens vorgesehenen, als Buchse ausgebildeten Widerlager besteht, dessen Außendurchmesser maximal gleich dem Durchmesser der in der Wand vorgesehenen Bohrung ist. Nach dem Einführen des Widerlagers in die Bohrung wird ein lose auf dem Bolzen sitzender, wendelförmiger Sprengring, dessen Außendurchmesser größer als der Bohrungsdurchmesser ist, durch die Bohrung hindurch derart in den Hohlraum eingeführt, daß er zwischen der Wand und dem Widerlager zu liegen kommt und dann ein Festziehen der Verbindung mittels einer Mutter od. dgl. ermöglicht. Bei dieser bekannten Vorrichtung ist daher die Größe der Auflagefläche der Befestigungsvorrichtung auf der Rückseite der Wand nicht vom Querschnitt der Mutter bzw. des Widerlagers, sondern von der Ringfläche des Sprengrings abhängig und daher einerseits durch das Maß, das ein Einführen des Sprengrings durch die Bohrung gerade noch ermöglicht, und andererseits durch die häufig geringen Abstände beschränkt, die die Bohrung von seitlichen, den Hohlraum begrenzenden Zwischen- oder Außenwänden hat. Außerdem ist ein schnelles Einführen des Sprengrings um so komplizierter, je enger die räumlichen Verhältnisse im Einzelfall sind.

Der Erfindung liegt daher die Aufgabe zugrunde, die Vorrichtung der eingangs bezeichneten Gattung dadurch weiterzubilden, daß sie auch bei beengten räumlichen Verhältnissen leicht montiert werden kann, auf der Rückseite der Bohrung eine große Auflagefläche für die Mutter selbst ermöglicht und insbesondere zur Montage von schweren, beim Gebrauch stark belasteten Stoßgriffen, Haltestangen od. dgl. an dünnen Hohlwänden mit geringer Hohlraumtiefe geeignet ist.

Zur Lösung dieser Aufgabe dienen die kennzeichnenden Merkmale des Anspruchs 1 und die Merkmale des Anspruchs 7.

Weitere vorteilhafte Merkmale der Erfindung ergeben sich aus den Unteransprüchen 2 bis 6.

Die Erfindung wird nachfolgend in Verbindung mit der beiliegenden Zeichnung an Ausführungsbeispielen näher erläutert. Es zeigen:
- Fig. 1: einen Querschnitt durch eine Mutter einer erfindungsgemäßen Vorrichtung längs der Linie I-I der Fig. 3;
- Fig. 2: einen Schnitt längs der Linie II-II der Fig. 1;
- Fig. 3: eine Unteransicht der Mutter nach Fig. 1 und 2;
- Fig. 4: eine Seitenansicht eines mit der Mutter nach Fig. 1 bis 3 zusammenwirkenden Bolzens der erfindungsgemäßen Vorrichtung;
- Fig. 5 bis 8: vier verschiedene, teilweise geschnitten dargestellte Ansichten und Einbausituationen in verkleinertem Maßstab bei Anwendung der Vorrichtung nach Fig. 1 bis 4 in einer ersten Ausführungsform; und
- Fig. 9 und 10: zwei verschiedene, geschnitten dargestellte Ansichten und Einbausituationen in verkleinertem Maßstab bei Anwendung der Vorrichtung nach Fig. 1 bis 4 in einer zweiten Ausführungsform.

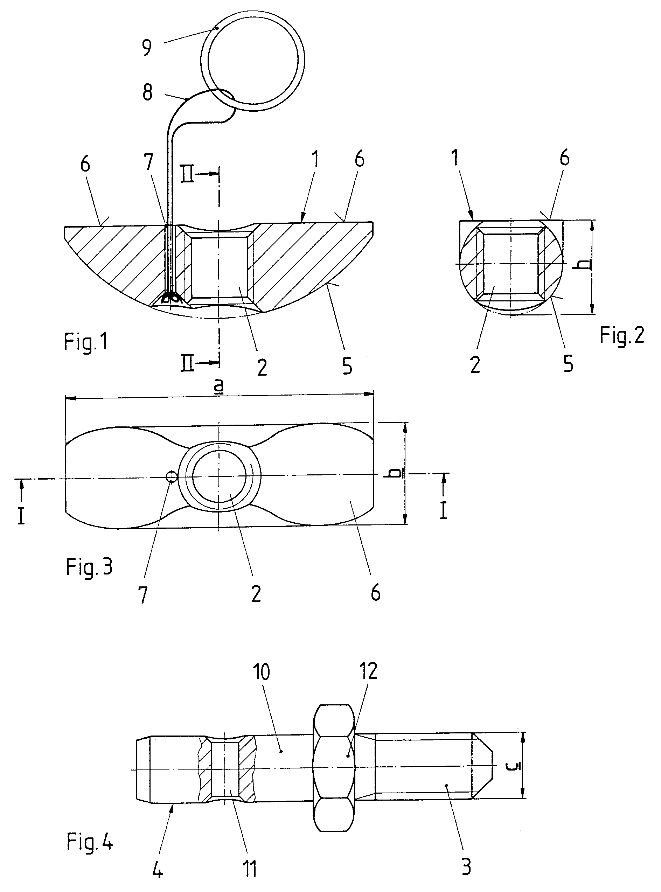

Eine in Fig. 1 bis 3 dargestellte Mutter 1 mit einer Gewindebohrung 2 weist in der Unteransicht (Fig. 3) einen im wesentlichen rechteckigen, ovalen, flachovalen od. dgl. Außenquerschnitt auf. Die Mutter 1 besitzt damit in einer Richtung eine vergleichsweise große Länge a, senkrecht dazu dagegen eine vergleichsweise Kleine Breite b, die nur wenig größer als der Durchmesser der Gewindebohrung 2 bzw. der Außendurchmesser c eines Gewindeabschnitts 3 eines Bolzens 4 (Fig. 4) ist, der in die Gewindebohrung 2 eingeschraubt werden kann. Dagegen ist das Maß a erheblich, vorzugsweise um ein mehrfaches größer als das Maß b. In der aus Fig. 1 und 2 ersichtlichen Weise weist die Mutter 1 außerdem eine konvex gekrümmte Oberfläche 5 auf, die an einer im wesentlichen ebenen Bodenfläche 6 endet, die sich senkrecht zur Achse der Gewindebohrung 2 erstreckt und im wesentlichen eine den Maßen a und b entsprechende Ausdehnung aufweist. Dadurch besitzt die Einsteckmutter 1 ihre größte, senkrecht zu den Maßen a und b gemessene Höhe h im Bereich der Achse der Gewindebohrung 2, von wo aus sie zu den Seiten hin allmählich immer flacher wird.

Die Mutter 1, die aus Stahl, aber auch z.B. aus einem Kunststoff bestehen kann, ist ferner mit einer parallel zur Gewindebohrung 2 angeordneten Bohrung 7 versehen, die zum Einhängen eines Halteelements 8, hier eines Fadens oder Drahts, dient, an dessen freiem Ende ein Sicherungselement 9, z.B. ein Ring, befestigt ist, dessen Bedeutung weiter unten erläutert ist. Dazu ist das Halteelement 8 z.B. nach Art einer Schlaufe um das Sicherungselement 9 geschlungen, von der Seite der Bodenfläche 6 her in die Bohrung 7 eingeführt und dann an deren entgegengesetztem Ende durch einen Knoten oder sonstwie unverlierbar in der Mutter 1 gehalten.

Der Bolzen 4 ist gemäß Fig. 4 nach Art eines für Wand- oder Türbefestigungen bekannten Stehbolzens ausgebildet. Er weist dazu den Gewindeabschnitt 3 und einen an diesen anschließenden, gewindelosen Abschnitt 10 mit einem Querloch 11 auf. Zwischen beiden Abschnitten 3 und 10 ist ein Mittel 12 zum Festziehen des Bolzens 4 im Gewindeabschnitt 2 vorgesehen, das im Ausführungsbeispiel aus einem am Bolzen 4 starr befestigten Bund mit Sechskantquerschnitt besteht und sich zum Ansetzen eines Werkzeugs in Form eines Schraubenschlüssels od. dgl. eignet.

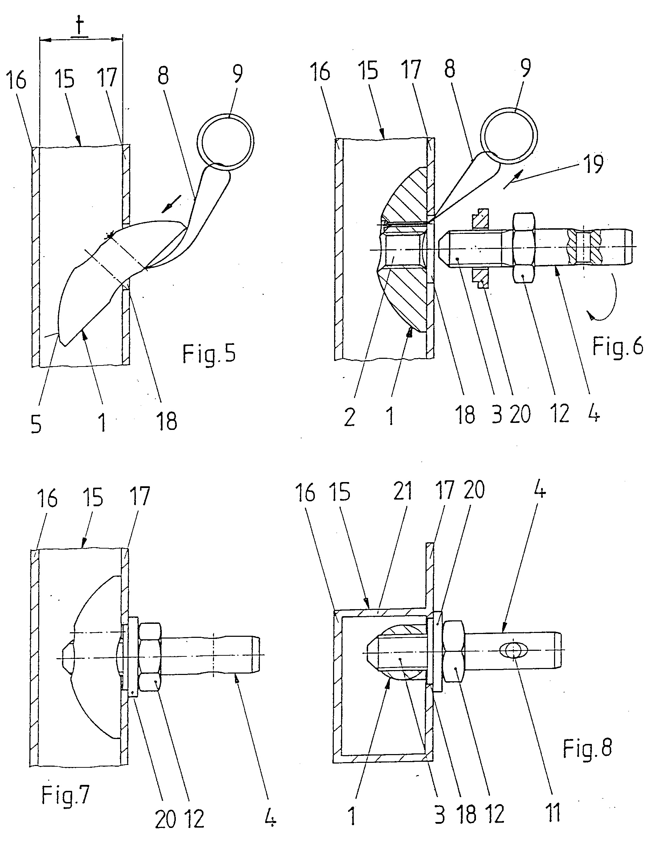

Es besteht häufig die Aufgabe, einen nicht näher dargestellten Gegenstand an einein Hohlprofil 15 od. dgl. (Fig. 5 bis 8) zu befestigen, das aus zwei dünnen, durch nicht dargestellte Abstandhalter, Zwischenwände od. dgl. in einem vorgegebenen, Abstand gehaltenen Wänden 16,17 besteht, wobei häufig eine nur wenige Millimeter bis Zentimeter betragende Hohlraumtiefe t (Fig. 5) erhalten wird. Dies ist dem Fachmann allgemein bekannt (DE 37 25 719 A1) und braucht daher nicht näher erläutert werden. Mit Hilfe der anhand der Fig. 1 bis 4 beschriebenen Vorrichtung wird hierzu wie folgt vorgegangen:

Es wird zunächst die Mutter 1 bei nicht eingedrehtem Bolzen 4 in eine entsprechende Bohrung 18 eingeführt, die hier in der dünnen Wand 17 ausgebildet ist (Fig. 5), wobei die gekrümmte Oberfläche 5 ein Verkippen der Mutter 1 derart ermöglicht, daß sie trotz ihrer vergleichsweise großen Länge und Höhe und der mit geringem Abstand t der Bohrung 18 gegenüberliegenden Wand 16 vollständig in den zwischen den Wänden 16 und 17 bestehenden Hohlraum eingeführt werden kann. Während dieses Vorgangs wird die Mutter 1 an dem Haltemittel 8 festgehalten. Selbst wenn dies nicht der Fall ist, verhindert spätestens das Sicherungselement 9 ein ungewolltes Herabfallen der Mutter 11 im Hohlrum, da das Sicherungselement 9 zweckmäßig zumindest in einer Richtung eine größere Abmessung besitzt, als dem Durchmesser der Bohrung 18 entspricht.

Zur Vorbereitung des Eindrehens des Gewindeabschnitts 3 in die Gewindebohrung 2 (Fig. 6) wird die Mutter 1 mit Hilfe des Halteelements 8 in die erforderliche Position gezogen, was in Fig. 6 durch einen Pfeil 19 angedeutet ist. Zur Erleichterung dieses Vorgangs ist die Bohrung 7 (Fig. 1) in Längsrichtung dicht neben der Gewindebohrung 2 angeordnet. Nachdem die Gewindebohrung 2 im Bereich der Bohrung 18 der Wand 17 angeordnet ist, kann der Gewindeabschnitt 2 eingedreht und dann mittels eines an das Mittel 12 angesetzten Werkzeugs festgezogen werden, wobei sich die Einsteckmutter 1 von hinten gegen die Wand 17 legt, während das Mittel 12 auf der Vorderseite der Wand 17 zu liegen kommt. Die so hergestellte Befestigung des als Stehbolzen wirksamen Bolzens 4 an der Wand 17 ist äußerst stabil, da das Mittel 12 gleichzeitig als Mittel zur Verspannung der Wand 17 zwischen ihm und der Mutter 1 dient. Dabei kann mit Hilfe des auf das Mittel 12 einwirkenden Werkzeugs ein sehr hohes Maß an Verspannung hergestellt werden, da sich das Mittel 12 am Bolzen 4 abstützt, insbesondere wenn die Mutter 1 und der Bolzen 4 aus Stahl bestehen. Vor dem endgültigen Festziehen, aber nach dem bereits erfolgten Eindrehen des Bolzens 4 in die Gewindebohrung 2 wird das Halteelement 8 mit einem scharfen Messer od. dgl. dicht an der Oberfläche der Wand 17 abgeschnitten, so daß es nach dem Festziehen des Bolzens 4 unsichtbar ist. Bei Bedarf kann zwischen dem Mittel 12 und der Wand 17 noch eine Zentrierhülse 20 angeordnet werden (Fig. 6), die einen genau in die Bohrung 18 passenden Zentrierabschnitt und einen daran grenzenden, an der Wand 18 zu liegen kommenden Flanschabschnitt aufweist und zugleich dichtend wirken könnte.

Der Bolzen 4 nimmt nun die aus Fig. 7 ersichtliche Position ein. In dieser kann ein Gegenstand, der mit einer entsprechenden Aufnahmeöffnung auf den gewindelosen Abschnitt 10 geschoben wird, mittels eines in das Querloch 11 eingeführten Querstifts auf dem Bolzen 4 befestigt werden.

Wie insbesondere Fig. 7 und 8 zeigen, bringen die unterschiedlichen Abmessungen der Mutter 1 in Längs- und Querrichtung den wesentlichen Vorteil mit sich, daß die Bohrung 18 bei Bedarf auch in großer Nähe einer Zwischen- oder Außenwand 21 einer Tür od. dgl. angebracht werden kann, da die Mutter 1 dieser Wand 21 mit ihrer Schmalseite zugewandt werden kann. Trotz des geringen Abstandes der Bohrung 18 bzw. der Mutter 1 von dieser Wand 21 besitzt die Mutter 1 eine ausreichend großflächige Bodenfläche 6 (Fig. 1), um eine feste Montage auch bei dünnen Wänden zu ermöglichen.

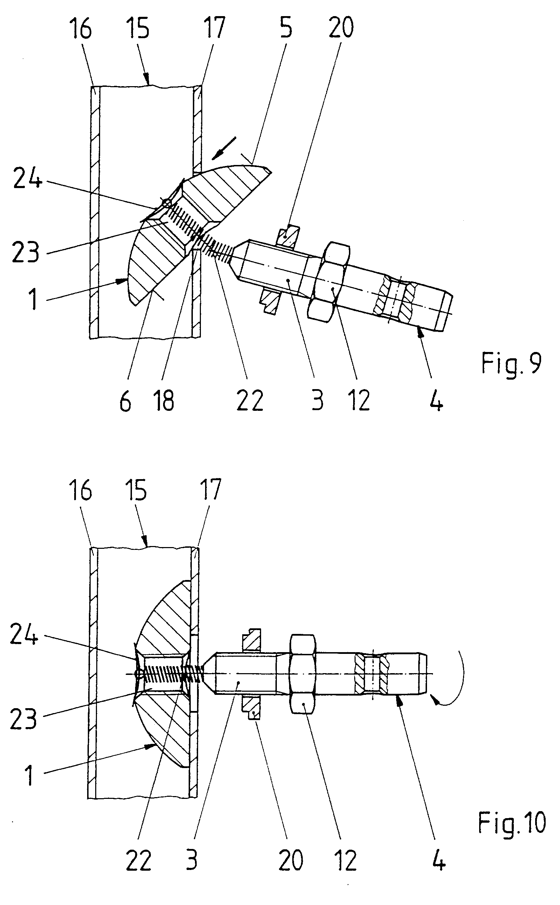

Bei der alternativen Ausführungsform nach Fig. 9 und 10, in denen gleiche Teile mit denselben Bezugszeichen versehen sind, ist das Halteelement 8 durch ein Halteelement 22 ersetzt. Dieses besteht aus einem Kleinen, zugelastischen Element, z.B. einer Spiralfeder, einem Gummiband od. dgl., das wie ein Gelenk arbeitet und dessen eines Ende an der freien Stirnfläche des Gewindeabschnitts 3 des Bolzens 4 befestigt, z.B. angelötet, angepreßt, angeklebt, angeschweißt oder sonstwie befestigt ist. Im Ausführungsbeispiel weist die Mutter 1 eine Gewindebohrung 23 in Form eines an die Bodenfläche 6 grenzenden Sacklochs auf, das an der an die gekrümmte Oberfläche 5 grenzenden Seite von einem ein Mittelloch aufweisenden Wandabschnitt begrenzt ist. Durch dieses Mittelloch wird eine am freien Ende des Halteelements 22 befestigte Öse gesteckt, in die nachfolgend ein Befestigungsstift 24 eingeführt wird, um die Mutter 1 unverlierbar mit dem Bolzen 4 zu verbinden.

Zur Montage der Vorrichtung nach Fig. 9 und 10 wird analog zu Fig. 5 zunächst die Mutter 1 bei noch nicht in die Gewindebohrung 23 eingedrehtem Bolzen 4 durch die Bohrung 18 der Wand 17 gedrückt. Dabei ist das Halteelement 22 so flexibel ausgebildet, daß der Bolzen 4 diesen Vorgang nicht behindert. Außerdem ist die Federkraft des Halteelements 22 aber auch so gewählt, daß die Mutter 1 nach dem Passieren der Bohrung 18 mit ihrer Bodenfläche 6 so fest gegen die Innenwandung der Wand 17 gezogen wird, daß der Gewindeabschnitt 3 des Bolzens 4 nach entsprechender Ausrichtung eingedreht werden kann.

Die im Ausführungsbeispiel dargestellte Vorrichtung dient z.B. zur Anwendung eines Bolzens mit einem M10x1-Gewinde. Die Bohrung 18 in der Wand 17 erhält dabei einen Durchmesser von z.B. 16 mm. Die Mutter 1 nach Fig. 1 bis 3 wird so bemessen daß a = 45 mm b = 15 mm und h = 12,5 mm ist. Der Gewindeabschnitt 3 des Bolzens 4 hat eine Länge von z.B. 20 mm, wobei diese Länge im wesentlichen von den Abständen der Wände 16 und 17 abhängt. Eine solche Vorrichtung kann problemlos in Hohlprofilen 15 montiert werden, bei denen die Hohlraumtiefe t bzw. der Abstand der Wände 16,17 nur 22 mm beträgt. Dennoch lassen sich in der Gewindebohrung ca. zehn Gewindegänge unterbringen, so daß die Verbindung sehr stabil ist. Da das Maß b nur 15 mm beträgt, kann die Montage auch erfolgen, wenn der Abstand der nächsten, senkrecht zu den Wänden 16,17 angeordneten Zwischen- oder Abschlußwand 21 von der Mittelachse der Bohrung 18 nur wenig mehr als 7,5 mm beträgt. Die Herstellung der Mutter 1 erfolgt vorzugsweise durch entsprechendes Ablängen, Biegen und Abschneiden oder Abschleifen eines Rundstabs, der im Ausführungsbeispiel einen Durchmesser von 15 mm hätte.

Die Erfindung ist nicht auf die beschriebenen Ausführungsbeispiele beschränkt, die auf vielfache Weise abgewandelt werden können. Insbesondere ist es möglich, statt des Mittels 12 eine übliche Sechskantmutter zu verwenden, die nach dem mit der Hand erfolgten Eindrehen des Bolzens 4 in die Mutter 1 festgezogen wird, oder statt des Bolzens 4 einen durchgehenden Gewindebolzen vorzusehen, auf den der zu montierende Gegenstand durch Schrauben, mittels einer Mutter oder sonstwie befestigt wird. Weiter können andere Halteelemente 8,22 und/oder Sicherungselemente 9 vorgesehen werden. Außerdem ist es ohne weiteres möglich, die Vorrichtung je nach Anwendungszweck mit anderen als M10x1-Gewinden zu versehen und die Abmessungen der Mutter 1 entsprechend anzupassen. Schließlich braucht die Mutter 1 nicht notwendigerweise mit einer durchgehend gekrümmten Oberfläche 5 versehen werden, wenngleich die dargestellte Oberflächenform auch mit besonderem Vorteil dazu dient, ohne Einschränkung der beschriebenen Montagemöglichkeiten eine große, für die Stabilität der Befestigung ausschlaggebende Höhe h zu erzielen, d.h. ausreichend viele Gewindewindungen unterzubringen. Für weniger stabile Befestigungen können dagegen auch Muttern 1 verwendet werden, die eine weniger stark gewölbte Oberfläche und daher eine wesentlich geringere Höhe h besitzen.

## Patentansprüche

1. Vorrichtung zur Befestigung eines Gegenstands an einer eine Bohrung (18) aufweisenden Wand (17) od. dgl., bestehend aus einer zum Durchstecken durch die Bohrung (18) und zur Anordnung auf der Rückseite der Wand (17) bestimmten Mutter (1), die eine Gewindebohrung (2), eine deren Durchmesser nur wenig überragende Breite (b) und eine den Bohrungsdurchmesser erheblich überragende Länge (a) besitzt, einem mit der Mutter (1) verbundenen, der Montage dienenden Halteelement (8,22), einem Bolzen (4) mit einem in die Gewindebohrung (2) der Mutter (1) eindrehbaren Gewindeabschnitt (3) und einem zur Anordnung auf der Vorderseite der Wand (17) bestimmten Mittel (12) zur Verspannung der Wand (17) zwischen diesem und der Mutter (1), dadurch gekennzeichnet, daß die Mutter (1) im Bereich der Gewindebohrung (2) ihre größte Höhe (h) und von dort zu ihren Längsrändern hin eine allmählich abnehmende Höhe besitzt, und daß das Mittel (12) zur Verspannung am Bolzen (4) abgestützt ist.

2. Vorrichtung nach Anspruch 1, dadurch gekennzeichnet, daß das Mittel (12) zur Verspannung aus einem am Bolzen (4) befestigten, zum Ansetzen eines Werkzeugs bestimmten Bund besteht.

3. Vorrichtung nach Anspruch 1 oder 2, dadurch gekennzeichnet, daß das Halteelement (8) aus einem Draht oder Faden besteht.

4. Vorrichtung nach einem der Ansprüche 1 bis 3, dadurch gekennzeichnet, daß das Halteelement (8) mit einem Sicherungselement (9) versehen ist, das wenigstens in einer Richtung eine größere Abmessung besitzt, als dem Durchmesser der Bohrung (18) entspricht.

5. Vorrichtung nach Anspruch 1 oder 2, dadurch gekennzeichnet, daß das Haltelement (22) aus einem zugelastischen Element (22) besteht, dessen eines Ende an der Mutter (1) und dessen anderes Ende am Bolzen (4) befestigt ist.

6. Vorrichtung nach Anspruch 5, dadurch gekennzeichnet, daß das zugelastische Element eine Feder ist.

7. Anwendung der Vorrichtung nach einem der Ansprüche 1 bis 6 zur Befestigung der Stehbolzen von Stoßgriffen, Griffstangen od. dgl. an Hohlwänden oder Rahmentüren mit geringer Hohlraumtiefe (t).
